# EUROPÄISCHE PATENTSCHRIFT

(11) **EP 3 976 394 B1**
(45) Veröffentlichungstag und Bekanntmachung des Hinweises auf die Patenterteilung: **05.03.2025**
(21) Anmeldenummer: 20720372.0
(22) Anmeldetag: 08.04.2020
(51) Int. Cl.: B60C 13/00

(54) **FAHRZEUGLUFTREIFEN**
PNEUMATIC TYRE FOR A VEHICLE
PNEUMATIQUE DE VÉHICULE

(30) Priorität: 29.05.2019 DE 102019207908
(43) Veröffentlichungstag der Anmeldung: 06.04.2022
(73) Patentinhaber: Continental Reifen Deutschland GmbH, 30175 Hannover (DE)
(72) Erfinder: RITTWEGER, Stefan, 30419 Hannover (DE); JURCO, Juraj, 30419 Hannover (DE)
(74) Vertreter: Continental Corporation
(86) Internationale Anmeldenummer: PCT/EP2020/059956
(87) Internationale Veröffentlichungsnummer: WO 2020/239305

(56) Entgegenhaltungen:
- EP-A1- 2 554 401
- WO-A1-2016/005569
- DE-A1- 102013 223 567
- DE-U1- 202014 010 855
- US-A1- 2015 004 335

## Beschreibung

Die Erfindung betrifft einen Fahrzeugluftreifen mit zumindest einem auf seiner Außenfläche ausgebildeten Flächenelement mit einer dem Flächenelement eine Rauheit verleihenden Kontraststruktur.

Es ist bekannt auf der Außenfläche von Fahrzeugluftreifen, insbesondere auf Seitenwänden, Flächenelemente mit einer Kontraststruktur auszubilden, welche vorrangig die Aufgabe haben, einen Kontrast zu anderen, insbesondere zu unstrukturierten, Flächenbereichen der Seitenwände zu schaffen, um derart beispielsweise die Erkennbarkeit von auf den Seitenwänden befindlichen Zeichen, etwa von Designelementen oder Logos, zu verbessern. Flächenelemente mit Kontraststrukturen ermöglichen dies, indem sie - im Vergleich zu glatten Flächen - weniger Licht reflektieren, auftreffendes Licht also "einfangen" und für den Betrachter daher dunkler als glatte Flächenbereiche erscheinen.

Fahrzeugluftreifen aufweisend eine Kontraststruktur sind bekannt aus der DE 20 2014 010855 U1, EP 2554401 A1, WO 2016/005569 A1, US 2015/004335 A1, und DE 10 2013223567 A1.

Ein Fahrzeugluftreifen eingangs genannter Art ist beispielsweise aus der US 2012/0227879 A1 bekannt. Auf der Außenfläche des Fahrzeugluftreifens ist zumindest ein Flächenelement mit einer Kontraststruktur aus einer Vielzahl von beispielsweise kegelförmigen Erhebungen ausgebildet. Die kegelförmigen Erhebungen weisen einen mittleren Durchmesser von 0,03 mm bis 0,5 mm auf, wobei mindestens fünf, bevorzugt mindestens fünfzehn, Erhebungen pro Quadratmillimeter ausgebildet sind. Die gemittelte Rautiefe R_{Z} der Kontraststruktur, ermittelt nach der mittlerweile zurückgezogenen DIN 4768, beträgt 5 µm bis 30 µm. Zur Ausbildung solcher Erhebungen am Reifen wird das entsprechende Formteil der den Reifen vulkanisierenden Vulkanisationsform mittels Lasergravur mit Vertiefungen versehen.

Die US 2016/0152095 A1, die US 2016/0185163 A1 und die US 2016/0137008 A1 befassen sich jeweils mit einem Fahrzeugluftreifen, welcher auf zumindest einer seiner Seitenwände ein Flächenelement mit einer Kontraststruktur aufweist. Die Kontraststruktur ist beispielsweise von Erhebungen mit konischer Gestalt gebildet, welche sich in einer in der Seitenwand ausgebildeten Vertiefung befinden und eine gemittelte Querschnittsfläche von 0,0007 mm² bis 0,06 mm² aufweisen.

Die bisher bekannten Kontraststrukturen sind weitgehend regelmäßig gestaltet, wodurch ihre Kontrastwirkung begrenzt ist.

Der Erfindung liegt die Aufgabe zugrunde, auf Reifen eine Kontraststruktur mit einer deutlich verbesserten Kontrastwirkung zur Verfügung zu stellen.

Gelöst wird die gestellte Aufgabe erfindungsgemäß dadurch, dass die Kontraststruktur eine flächendeckende, ungleichmäßige Berg- und Tal- Kontraststruktur mit einem flächenbezogenen Rauheitswert Sₐ nach EN ISO 25178 von 50 µm bis 150 µm ist und dass die ungleichmäßige Berg- und Tal- Kontraststruktur mit jeder Höhenfläche, welche sich parallel zum Basisniveau der Berg- und Tal- Kontraststruktur erstreckt, gegenüber dem Basisniveau in einer Höhe von 100 µm liegt und einen Flächeninhalt von 1mm x 1mm aufweist, eine Schnittfläche bildet, welche 40% bis 60% des Flächeninhalts der Höhenfläche einnimmt.

Eine solche Berg- und Tal-Kontraststruktur zeichnet sich - im Gegensatz zu den bekannten, aus einzelnen, weitgehend gleich gestalteten Erhebungen gebildeten Kontraststrukturen - durch "zusammenhängende" bzw. ineinander übergehende Berge und Täler aus, die auf unterschiedliche Höhen reichen (Berge) und sich auf unterschiedlichen Niveaus befinden (Täler) und auch Bergrücken und Bergsättel aufweist. Die Berg- und Talkontraststruktur ist dabei insbesondere durch eine Vielzahl von Kreuzungsstellen gekennzeichnet, an welchen mehrere Bergstrukturen oder mehrere Talstrukturen zusammenlaufen. Dadurch ist das "Negativ" der Kontraststruktur in der Vulkanisationsform sehr stabil, lässt sich beim Einformen des Rohreifens gut entlüften und am Reifen in tadellosem Zustand ausformen. Aufgrund ihrer Ungleichmäßigkeit und ihrer gegenüber den bekannten Kontraststrukturen deutlich größeren Rauheit fängt die erfindungsgemäße Berg- und Tal-Kontraststruktur optimal Licht ein, sodass ihre Kontrastwirkung zu glatten Flächenbereichen wesentlich besser ist. Zusätzlich ist die unregelmäßige Berg- und Talkontraststruktur auch besonders robust gegenüber etwaigen im korrespondierenden Formteil der Vulkanisationsform zurückbleibenden Verunreinigungen oder dort etwaig auftretenden, geringfügigen Schäden.

Gemäß einer bevorzugten Ausführungsvariante beträgt der flächenbezogene Rauheitswert Sₐ nach EN ISO 25178 der ungleichmäßigen Berg- und Tal- Kontraststruktur 70 µm bis 120 µm. Eine derart raue Berg- und Tal- Kontraststruktur ist einerseits besonders robust und ermöglicht andererseits eine sehr gute Kontrastwirkung zu glatten Flächenbereichen.

Weitere bevorzugte Ausführungsvarianten, welche sich mit dem Höhenprofil der Berg- und Tal- Kontraststruktur befassen, tragen zu einer weiteren Verbesserung der Kontrastwirkung bei.

In diesem Zusammenhang ist es von Vorteil, wenn die ungleichmäßige Berg- und Tal-Kontraststruktur mit jeder Höhenfläche, welche sich parallel zum Basisniveau der Berg- und Tal- Kontraststruktur erstreckt, gegenüber diesem in einer Höhe von 50 µm liegt und einen Flächeninhalt von 1mm x 1mm aufweist, eine Schnittfläche bildet, welche 80% bis 90% des Flächeninhalts der Höhenfläche einnimmt.

Ferner ist es in diesem Zusammenhang von Vorteil, dass die ungleichmäßige Berg- und Tal- Kontraststruktur mit jeder Höhenfläche, welche sich parallel zum Basisniveau der Berg- und Tal- Kontraststruktur erstreckt, gegenüber dem Basisniveau in einer Höhe von 100 µm liegt und einen Flächeninhalt von 1mm x 1mm aufweist, eine Schnittfläche bildet, welche 40% bis 60% des Flächeninhalts der Höhenfläche einnimmt.

Darüber hinaus ist es in diesem Zusammenhang von Vorteil, wenn die ungleichmäßige Berg- und Tal- Kontraststruktur mit jeder Höhenfläche, welche sich parallel zum Basisniveau der Berg- und Tal- Kontraststruktur erstreckt, gegenüber dem Basisniveau in einer Höhe von 200 µm liegt und einen Flächeninhalt von 1mm x 1mm aufweist, eine Schnittfläche bildet, welche 20% bis 40% des Flächeninhalts der Höhenfläche einnimmt.

Ferner ist es besonders vorteilhaft, wenn die ungleichmäßige Berg- und Tal-Kontraststruktur Bergspitzenbereiche aufweist, welche an Höhenflächen angrenzen, die sich parallel zum Basisniveau der Berg- und Tal- Kontraststruktur erstrecken, gegenüber dem Basisniveau in einer Höhe von 400 µm liegen und einen Flächeninhalt von 1mm x 1mm aufweisen, wobei die ungleichmäßige Berg- und Tal- Kontraststruktur innerhalb jeder dieser Höhenflächen bis zu fünf, insbesondere bis zu drei, Bergspitzenbereiche aufweist.

Gemäß einer weiteren bevorzugten Ausführungsvariante weist die Berg- und Tal-Kontraststruktur gegenüber dem Basisniveau an ihrer bzw. an ihren höchsten Stelle(n) eine Höhe von 400µm bis 500 µm auf. Dadurch fängt die Berg- und Tal- Kontraststruktur besonders viel Licht ein, ihrer Kontrastwirkung zu glatten Flächenbereichen ist weiter verbessert.

Bei einer bevorzugten Ausführung ist das Flächenelement mit der ungleichmäßigen Berg- und Tal- Kontraststruktur auf einer Seitenwand des Fahrzeugluftreifens ausgebildet.

Gemäß einer weiteren bevorzugten Variante ist das Flächenelement mit der ungleichmäßigen Berg- und Tal-Kontraststruktur am Laufstreifen des Fahrzeugluftreifens ausgebildet, vorzugsweise auch auf der mit dem Untergrund in Kontakt kommenden Außenfläche. Zur Erzielung besonderer Hell/Dunkeleffekte kann die ungleichmäßige Berg-und Tal-Kontraststruktur auf Rillenflanken und/oder Rillengründen von im Laufstreifen verlaufenden Rillen ausgebildet sein. Es ist auch möglich, Flächenelemente mit der ungleichmäßigen Berg- und Tal-Kontraststruktur an den zu den Seitenwänden verlaufenden Schulterflanken des Reifens auszubilden.

Bevorzugt bildet dabei das Flächenelement mit der ungleichmäßigen Berg- und Tal-Kontraststruktur ein Designelement, einen Schriftzug oder ein Schriftzeichen oder umgibt ein solches bzw. einen solchen.

Weitere Merkmale, Vorteile und Einzelheiten der Erfindung werden nun anhand der Zeichnung, die schematisch ein Ausführungsbeispiel der Erfindung zeigt, näher beschrieben. Dabei zeigen
Fig. 1 einen Umfangsabschnitt einer Seitenwand eines Fahrzeugluftreifens in Draufsicht mit einer Ausführungsvariante der Erfindung und
Fig. 2 eine Mikroskopaufnahme im Bereich eines auf der Seitenwand befindlichen Flächenelementes.

Bei sämtlichen in den Figuren gezeigten Darstellungen ist die Wölbung der Seitenwand unberücksichtigt.

Die Erfindung befasst sich mit auf der Außenfläche von Fahrzeugluftreifen ausgebildeten Flächenelementen mit einer speziellen Kontraststruktur.

Die Flächenelemente sind dabei beispielsweise auf einem Bereich der Außenfläche ausgebildet, welcher beim Einsatz des Fahrzeugluftreifens mit dem Untergrund nicht bzw. nicht flächig in Kontakt kommt. Besonders bevorzugt sind die Flächenelemente auf einer Seitenwand des Fahrzeugluftreifens ausgebildet. Seitenwände von Fahrzeugluftreifen enthalten üblicherweise Zeichen, welche die vorgeschriebenen Angaben, wie Dimensionsangaben, den Speedindex, den Hersteller, den Verwendungszweck (Sommer-/ Winterreifen) wiedergeben, oder sonstige Zeichen, wie Logos oder Designelemente. Flächenelemente mit einer Kontraststruktur können die erwähnten Zeichen auf der Seitenwand umgeben oder die Zeichen selbst bilden. Beispielsweise ist ein solches Flächenelement ein in der Kontraststruktur ausgeführtes Logo, alternativ ist die Oberfläche des Logos selbst glatt ausgeführt und das Logo ist von einer Kontraststruktur umgeben.

Die Flächenelemente können ferner insbesondere auch auf Rillenflanken und/oder Rillengründen von im Laufstreifen verlaufenden Rillen oder am Laufstreifenauslauf, also an den außerhalb der Bodenaufstandsfläche zu den Seitenwänden verlaufenden Schulterflanken, oder an der Außenfläche des Laufstreifens, also an mit dem Untergrund in Kontakt tretenden Lauffläche, angebracht sein.

Das Niveau, gegenüber welchem die Kontraststruktur am fertigen Reifen ausgebildet ist, wird nachfolgend als Basisniveau N_{B} bezeichnet. Das Basisniveau N_{B} kann beispielsweise von einem Teil der Außenfläche des Fahrzeugluftreifens, insbesondere der Seitenwand oder einem Boden einer auf der Seitenwand ausgebildeten flachen Vertiefung, gebildet sein.

Die Kontraststruktur kann im Zuge der Vulkanisation auf der Außenfläche des Fahrzeugluftreifens ausgeformt werden. Das bzw. die Formsegment(e) der Vulkanisationsform, beispielsweise die Seitenwandschalen, ist bzw. sind mit korrespondieren seichten Vertiefungen versehen, welche mittels Lasergravur erstellt werden. Eine solche Kontrastruktur ist daher ein Positiv gegenüber dem jeweiligen Basisniveau. Alternativ kann die Kontraststruktur auch am bereits fertig vulkanisierten Reifen mit Laser eingraviert werden, sodass diese ein Negativ gegenüber dem jeweiligen Basisniveau darstellt.

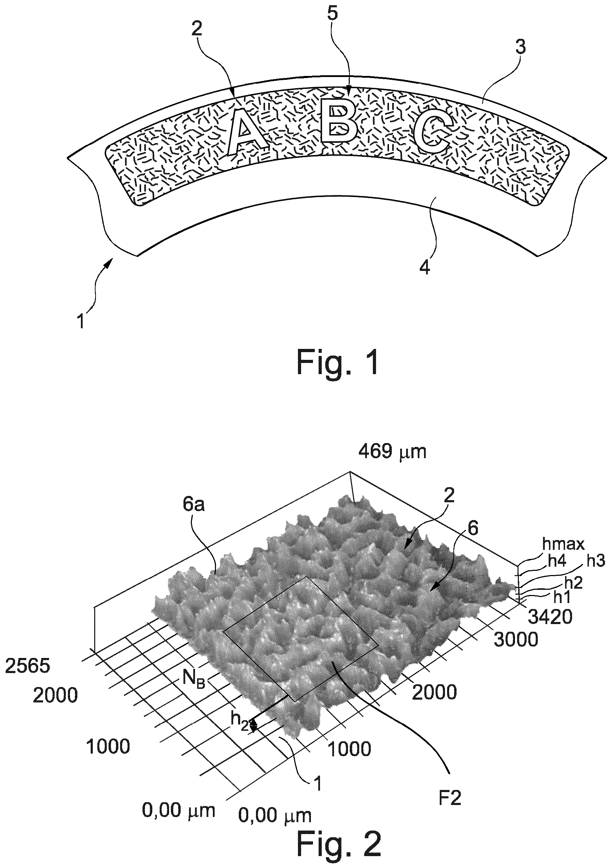

Fig. 1 zeigt eine schematische in die Ebene projizierte Darstellung eines Umfangsabschnittes einer Seitenwand 1 mit einem Flächenelement 2, welches im Wesentlichen die Form eines Abschnittes eines Kreisringes aufweist. In Fig. 1 sind zusätzlich ein Laufstreifenauslauf 3 und ein äußerer Wulstbereich 4, welcher bei auf einer Felge montiertem Reifen durch die Felge zumindest teilweise abgedeckt ist, angedeutet. Das Flächenelement 2 umgibt einen Schriftzug 5, dessen Buchstaben A B C eine glatte Oberfläche aufweisen. Der Schriftzug 5 ist somit nicht Bestandteil des Flächenelementes 2.

Fig. 2 zeigt eine Mikroskopkaufnahme eines randseitigen Teilbereiches des Flächenelementes 2, wobei zusätzlich das Basisniveau N_{B} angedeutet ist, welches beim gezeigten Ausführungsbeispiel dem Niveau der Seitenwand 1 entspricht. Wie die Bemaßungen zeigen, deckt die Mikroskopaufnahme eine Fläche von zirka 2500 µm x 2500 µm des Flächenelementes 2 ab. Das Flächenelement 2 ist flächendeckend (siehe Fig. 1), also über seine gesamte Erstreckung, mit einer ungleichmäßigen Berg- und Tal-Kontraststruktur 6 versehen, welche dem Flächenelement 2 eine Rauheit, also eine Unebenheit, verleiht. Die Berg- und Tal- Kontraststruktur 6 weist einen flächenbezogenen Rauheitswert Sₐ nach EN ISO 25178 von 50 µm bis 150 µm, insbesondere von 70 µm bis 120 µm, auf. Der flächenbezogene Rauheitswert Sₐ ist dabei bekannter Weise ein flächenbezogener arithmetischer Mittelwert, in diesem Fall ein auf die Fläche der Berg- und Tal- Kontraststruktur 6 bezogener arithmetischer Mittelwert.

Die Berg- und Tal- Kontraststruktur 6 ist von einer Vielzahl von auf unterschiedlichen Niveaus befindlichen Bergstrukturen mit Bergrücken und Bergsättel sowie Talstrukturen gebildet. Die Berg- und Talkontraststruktur 6 setzt sich daher aus einer Vielzahl von Bergen mit unterschiedlichen Höhen und einer Vielzahl von Tälern auf unterschiedlichem Niveau zusammen.

Die Gestalt der Berg- und Tal- Kontraststruktur 6 wird nachfolgend in Höhenflächen F₁, F₂, F₃ und F₄ betrachtet und anhand von diesen näher erläutert. Die Höhenflächen F₁, F₂, F₃ und F₄ erstrecken sich parallel zum jeweiligen Basisniveau N_{B}, weisen einen Flächeninhalt von 1mm x 1mm auf und schneiden die Berg- und Tal- Kontraststruktur 6 in verschiedenen gegenüber dem Basisniveau N_{B} ermittelten Höhen h₁ (Höhenfläche F₁), h₂ (Höhenfläche F₂), h₃ (Höhenfläche F₃) und h₄ (Höhenfläche F₄). Die Höhenflächen F₁, F₂, F₃ und F₄ erstrecken sich dabei ausschließlich im Bereich der Berg- und Tal- Kontraststruktur 6, ragen über diese seitlich also nicht hinaus. Jede Höhenfläche F₁, F₂, F₃ und F₄ weist daher einen oder mehrere Flächenbereich(e) auf, in welchem bzw. welchen die Höhenfläche F₁, F₂, F₃ und F₄ von der Berg- und Tal- Kontraststruktur 6 durchragt ist. Dieser bzw. diese Flächenbereich(e) bildet bzw. bilden eine einteilige bzw. mehrteilige Schnittfläche, welche Bestandteil der jeweilige Höhenfläche F₁, F₂, F₃ und F₄ ist. In Fig. 2 sind die Höhen h₁, h₂, h₃, h₄ und exemplarisch eine Höhenfläche F₂ eingezeichnet. Auf die Darstellung von Höhenflächen F₁, F₃ und F₄ wurde aus Übersichtsgründen verzichtet. Die Höhe h₁ beträgt 50 µm, die Höhe h₂ beträgt 100 µm, die Höhe h₃ beträgt 200 µm, die Höhe h₄ beträgt 400 µm.

Die Schnittfläche der Berg- und Tal- Kontraststruktur 6 mit jeder Höhenfläche F₁ nimmt vorzugsweise 80% bis 90% des Flächeninhaltes der jeweiligen Höhenfläche F₁ ein. Die Schnittfläche der Berg- und Tal- Kontraststruktur 6 mit jeder Höhenfläche F₂ nimmt 40% bis 60% des Flächeninhaltes der jeweiligen Höhenfläche F₂ ein. Die Schnittfläche der Berg- und Tal- Kontraststruktur 6 mit jeder Höhenfläche F₃ nimmt 20% bis 40% des Flächeninhaltes jeweiligen Höhenflächen F₃ ein. Die Höhenflächen F₄ trennen Bergspitzenbereiche 6a von der sonstigen Berg- und Tal- Kontraststruktur 6. Ein Bergspitzenbereich 6a ist ein zusammenhängender Bereich der Berg- und Tal-Kontraststruktur 6, welcher auf einer Höhenfläche F₄ "aufsitzt" bzw. an diese angrenzt. Innerhalb jeder Höhenfläche F₄ befinden sich vorzugsweise bis zu fünf, insbesondere bis zu drei, Bergspitzenbereiche 6a.

Ferner weist die Berg- und Tal- Kontraststruktur 6 gegenüber dem Basisniveau N_{B} an ihrer bzw. ihren höchsten Stelle(n) bevorzugt eine Höhe hₘₐₓ von 400 µm bis 500 µm auf.

Die Erfindung ist auf die beschriebene Ausführungsvariante nicht beschränkt.

### Bezugsziffernliste

- 1: Seitenwand
- 2: Flächenelement
- 3: Laufstreifenauslauf
- 4: Wulstbereich
- 5: Schriftzug
- 6: Berg- und Tal- Kontraststruktur
- 6a: Bergspitzenbereich
- F₁, F₂, F₃, F₄: Höhenfläche
- h₁, h₂, h₃, h₄, hₘₐₓ: Höhe
- N_{B}: Basisniveau

## Patentansprüche

1. Fahrzeugluftreifen mit zumindest einem auf seiner Außenfläche ausgebildeten Flächenelement (2) mit einer dem Flächenelement (3) eine Rauheit verleihenden Kontraststruktur (6),
**dadurch gekennzeichnet,**
**dass** die Kontraststruktur (6) eine flächendeckende, ungleichmäßige Berg- und Tal- Kontraststruktur (6) mit einem flächenbezogenen Rauheitswert Sₐ nach EN ISO 25178 von 50 µm bis 150 µm ist und
**dass** die ungleichmäßige Berg- und Tal- Kontraststruktur (6) mit jeder Höhenfläche (F₂), welche sich parallel zum Basisniveau (N_{B}) der Berg- und Tal-Kontraststruktur (6) erstreckt, gegenüber dem Basisniveau (N_{B}) in einer Höhe (h₂) von 100 µm liegt und einen Flächeninhalt von 1mm x 1mm aufweist, eine Schnittfläche bildet, welche 40% bis 60% des Flächeninhalts der Höhenfläche (F₂) einnimmt.

2. Fahrzeugluftreifen nach Anspruch 1, **dadurch gekennzeichnet, dass** der flächenbezogene Rauheitswert Sₐ nach EN ISO 25178 der ungleichmäßigen Berg- und Tal- Kontraststruktur (6) 70 µm bis 120 µm beträgt.

3. Fahrzeugluftreifen nach Anspruch 1 oder 2, **dadurch gekennzeichnet, dass** die ungleichmäßige Berg- und Tal- Kontraststruktur (6) mit jeder Höhenfläche (F₁), welche sich parallel zum Basisniveau (N_{B}) der Berg- und Tal-Kontraststruktur (6) erstreckt, gegenüber diesem in einer Höhe (h₁) von 50 µm liegt und einen Flächeninhalt von 1mm x 1mm aufweist, eine Schnittfläche bildet, welche 80% bis 90% des Flächeninhalts der Höhenfläche (F₁) einnimmt.

4. Fahrzeugluftreifen nach einem der Ansprüche 1 bis 3, **dadurch gekennzeichnet, dass** die ungleichmäßige Berg- und Tal- Kontraststruktur (6) mit jeder Höhenfläche (F₃), welche sich parallel zum Basisniveau (N_{B}) der Berg- und Tal-Kontraststruktur (6) erstreckt, gegenüber dem Basisniveau (N_{B}) in einer Höhe (h₃) von 200 µm liegt und einen Flächeninhalt von 1mm x 1mm aufweist, eine Schnittfläche bildet, welche 20% bis 40% des Flächeninhalts der Höhenfläche (F₃) einnimmt.

5. Fahrzeugluftreifen nach einem der Ansprüche 1 bis 4, **dadurch gekennzeichnet, dass** die ungleichmäßige Berg- und Tal- Kontraststruktur (6) Bergspitzenbereiche (6a) aufweist, welche an Höhenflächen (F₄) angrenzen, die sich parallel zum Basisniveau (N_{B}) der Berg- und Tal- Kontraststruktur (6) erstrecken, gegenüber dem Basisniveau (N_{B}) in einer Höhe (h₄) von 400 µm liegen und einen Flächeninhalt von 1mm x 1mm aufweisen, wobei die ungleichmäßige Berg- und Tal- Kontraststruktur (6) innerhalb jeder dieser Höhenflächen (F₄) bis zu fünf, insbesondere bis zu drei, Bergspitzenbereiche (6a) aufweist.

6. Fahrzeugluftreifen nach einem der Ansprüche 1 bis 5, **dadurch gekennzeichnet, dass** die Berg- und Tal- Kontraststruktur (6) gegenüber dem Basisniveau (N_{B}) an ihrer bzw. an ihren höchsten Stelle(n) eine Höhe (hₘₐₓ) von 400µm bis 500 µm aufweist.

7. Fahrzeugluftreifen nach einem der Ansprüche 1 bis 6, **dadurch gekennzeichnet, dass** das Flächenelement (2) mit der ungleichmäßigen Berg- und Tal-Kontraststruktur (6) auf einer Seitenwand (1) des Fahrzeugluftreifens ausgebildet ist.

8. Fahrzeugluftreifen mit einem profilierten Laufstreifen, nach einem der Ansprüche 1 bis 6, **dadurch gekennzeichnet, dass** das Flächenelement (2) mit der ungleichmäßigen Berg- und Tal-Kontraststruktur (6) am Laufstreifen, insbesondere auf der mit dem Untergrund in Kontakt kommenden Außenfläche des Laufstreifens und/oder auf Rillenflanken und/oder Rillengründen von im Laufstreifen verlaufenden Rillen, ausgebildet ist.

9. Fahrzeugluftreifen nach einem der Ansprüche 1 bis 6, **dadurch gekennzeichnet, dass** das Flächenelement (2) mit der ungleichmäßigen Berg- und Tal-Kontraststruktur (6) auf zu den Seitenwänden verlaufenden Schulterflanken des Reifens ausgebildet ist.

10. Fahrzeugluftreifen nach einem der Ansprüche 1 bis 9, **dadurch gekennzeichnet, dass** das Flächenelement (2) mit der ungleichmäßigen Berg- und Tal-Kontraststruktur (6) ein Designelement, einen Schriftzug oder ein Schriftzeichen bildet oder ein solches bzw. einen solchen umgibt.

## Claims

1. Pneumatic tyre for a vehicle, having formed on its outer surface at least one surface element (2) with a contrast structure (6) which imparts a roughness to the surface element (3),
**characterized**
**in that** the contrast structure (6) is a large-area, nonuniform hill-and-dale contrast structure (6) having an areal roughness value Sₐ according to EN ISO 25178 of 50 µm to 150 µm, and
**in that**, with each height surface (F₂) which extends parallel to the base level (N_{B}) of the hill-and-dale contrast structure (6), lies at a height (h₂) of 100 µm relative to the base level (N_{B}), and has an area of 1 mm x 1 mm, the nonuniform hill-and-dale contrast structure (6) forms an intersection area which occupies 40% to 60% of the area of the height surface (F₂).

2. Pneumatic tyre for a vehicle according to Claim 1, **characterized in that** the areal roughness value Sₐ according to EN ISO 25178 of the nonuniform hill-and-dale contrast structure (6) is 70 µm to 120 µm.

3. Pneumatic tyre for a vehicle according to Claim 1 or 2, **characterized in that**, with each height surface (F₁) which extends parallel to the base level (N_{B}) of the hill-and-dale contrast structure (6), lies at a height (h₁) of 50 µm relative to said base level, and has an area of 1 mm x 1 mm, the nonuniform hill-and-dale contrast structure (6) forms an intersection area which occupies 80% to 90% of the area of the height surface (F₁).

4. Pneumatic tyre for a vehicle according to any of Claims 1 to 3, **characterized in that**, with each height surface (F₃) which extends parallel to the base level (N_{B}) of the hill-and-dale contrast structure (6), lies at a height (h₃) of 200 µm relative to the base level (N_{B}), and has an area of 1 mm x 1 mm, the nonuniform hill-and-dale contrast structure (6) forms an intersection area which occupies 20% to 40% of the area of the height surface (F₃).

5. Pneumatic tyre for a vehicle according to any of Claims 1 to 4, **characterized in that** the nonuniform hill-and-dale contrast structure (6) has peak regions (6a) which adjoin height surfaces (F₄) which extend parallel to the base level (N_{B}) of the hill-and-dale contrast structure (6), lie at a height (h₄) of 400 µm relative to the base level (N_{B}), and have an area of 1 mm x 1 mm, wherein the nonuniform hill-and-dale contrast structure (6) has up to five, in particular up to three, peak regions (6a) within each of these height surfaces (F₄).

6. Pneumatic tyre for a vehicle according to any of Claims 1 to 5, **characterized in that** the hill-and-dale contrast structure (6) has a height (hₘₐₓ) of 400 µm to 500 µm relative to the base level (N_{B}) at its highest point(s).

7. Pneumatic tyre for a vehicle according to any of Claims 1 to 6, **characterized in that** the surface element (2) having the nonuniform hill-and-dale contrast structure (6) is formed on a sidewall (1) of the pneumatic tyre for a vehicle.

8. Pneumatic tyre for a vehicle having a profiled tread, according to any of Claims 1 to 6, **characterized in that** the surface element (2) having the nonuniform hill-and-dale contrast structure (6) is formed on the tread, in particular on the tread outer surface coming into contact with the ground and/or on groove flanks and/or groove bases of grooves extending in the tread.

9. Pneumatic tyre for a vehicle according to any of Claims 1 to 6, **characterized in that** the surface element (2) having the nonuniform hill-and-dale contrast structure (6) is formed on tyre shoulder flanks running to the sidewalls.

10. Pneumatic tyre for a vehicle according to any of Claims 1 to 9, **characterized in that** the surface element (2) having the nonuniform hill-and-dale contrast structure (6) forms a design element, lettering or a character or surrounds such a feature.

## Revendications

1. Pneumatique pour véhicule, comprenant au moins un élément de surface (2) formé sur sa surface extérieure et présentant une structure de contraste (6) qui confère une rugosité à l'élément de surface (3),
**caractérisé**
**en ce que** la structure de contraste (6) est une structure de contraste irrégulière (6) à montagnes et vallées, couvrant une surface, avec une valeur de rugosité Sₐ rapportée à la surface selon EN ISO 25178 allant de 50µm à 150µm, et
**en ce que** la structure de contraste irrégulière (6) à montagnes et vallées forme une surface d'intersection avec chaque surface en hauteur (F₂), qui s'étend parallèlement au niveau de base (N_{B}) de la structure de contraste (6) à montagnes et vallées, qui est située par rapport au niveau de base (N_{B}) à une hauteur (h₂) de 100µm et qui présente une superficie de 1mm x 1mm, laquelle surface d'intersection occupe 40% à 60% de la superficie de la surface en hauteur (F₂).

2. Pneumatique pour véhicule selon la revendication 1, **caractérisé en ce que** la valeur de rugosité Sₐ rapportée à la surface selon EN ISO 25178 de la structure de contraste irrégulière (6) à montagnes et vallées est de 70µm à 120µm.

3. Pneumatique pour véhicule selon la revendication 1 ou la revendication 2, **caractérisé en ce que** la structure de contraste irrégulière (6) à montagnes et vallées forme une surface d'intersection avec chaque surface en hauteur (F₁), qui s'étend parallèlement au niveau de base (N_{B}) de la structure de contraste (6) à montagnes et vallées, qui est située par rapport à celui-ci à une hauteur (h₁) de 50µm et présente une superficie de 1mm x 1mm, laquelle surface d'intersection occupe 80% à 90% de la superficie de la surface en hauteur (F₁).

4. Pneumatique pour véhicule selon l'une des revendications 1 à 3, **caractérisé en ce que** la structure de contraste irrégulière (6), à montagnes et vallées, forme une surface d'intersection avec chaque surface en hauteur (F₃) qui s'étend parallèlement au niveau de base (N_{B}) de la structure de contraste (6) à montagnes et vallées, qui est située par rapport au niveau de base (N_{B}) à une hauteur (h₃) de 200µm et présente une aire de 1mm x 1mm, laquelle surface d'intersection occupe 20% à 40% de la superficie de la surface en hauteur (F₃).

5. Pneumatique pour véhicule selon l'une des revendications 1 à 4, **caractérisé en ce que** la structure de contraste irrégulière (6) à montagnes et vallées comprend des zones de crête (6a) adjacentes à des surfaces en hauteur (F₄) qui s'étendent parallèlement au niveau de base (N_{B}) de la structure de contraste (6) à montagnes et vallées, qui sont situées par rapport au niveau de base (N_{B}) à une hauteur (h₄) de 400µm et présentent une superficie de 1mm x 1mm, la structure de contraste irrégulière (6) à montagnes et vallées présentant à l'intérieur de chacune de ces surfaces en hauteur (F₄) jusqu'à cinq, en particulier jusqu'à trois, zones de crête (6a).

6. Pneumatique pour véhicule selon l'une des revendications 1 à 5, **caractérisé en ce que** la structure de contraste (6) à montagnes et vallées présente, par rapport au niveau de base (N_{B}), à son ou ses points les plus élevés, une hauteur (hₘₐₓ) allant de 400µm à 500µm.

7. Pneumatique pour véhicule selon l'une des revendications 1 à 6, **caractérisé en ce que** l'élément de surface (2) présentant la structure de contraste irrégulière (6) à montagnes et vallées est formé sur un flanc (1) du pneumatique pour véhicule.

8. Pneumatique pour véhicule avec une bande de roulement profilée, selon l'une des revendications 1 à 6, **caractérisé en ce que** l'élément de surface (2) ayant la structure de contraste irrégulière (6) à montagnes et vallées est formé sur la bande de roulement, en particulier sur la surface extérieure de la bande de roulement venant en contact avec le sol et/ou sur des flancs de rainures et/ou des fonds de rainures de rainures s'étendant dans la bande de roulement.

9. Pneumatique pour véhicule selon l'une des revendications 1 à 6, **caractérisé en ce que** l'élément de surface (2) ayant la structure de contraste irrégulière (6) à montagnes et vallées est formé sur les flancs d'épaulement du pneumatique s'étendant vers les flancs.

10. Pneumatique pour véhicule selon l'une des revendications 1 à 9, **caractérisé en ce que** l'élément de surface (2) avec la structure de contraste irrégulière (6) forme un élément de design, une inscription ou un signe d'inscription ou entoure un tel élément ou un tel signe.
